**Europäisches Patentamt**

**European Patent Office**

**Office européen des brevets**

(11) Veröffentlichungsnummer: **0 296 472 B1**

# EUROPÄISCHE PATENTSCHRIFT

(45) Veröffentlichungstag der Patentschrift: **01.06.94**

(21) Anmeldenummer: **88109523.6**

(22) Anmeldetag: **15.06.88**

(51) Int. Cl.5: **G11B 7/24**, C08L 27/06, C08L 33/12, C08L 51/04

Die Akte enthält technische Angaben, die nach dem Eingang der Anmeldung eingereicht wurden und die nicht in dieser Patentschrift enthalten sind.

(54) **Verwendung von doppelbrechungsarmen Formmassen für Datenspeicher.**

(30) Priorität: **26.06.87 DE 3721054**
**23.03.88 DE 3809779**

(43) Veröffentlichungstag der Anmeldung:
**28.12.88 Patentblatt 88/52**

(45) Bekanntmachung des Hinweises auf die Patenterteilung:
**01.06.94 Patentblatt 94/22**

(84) Benannte Vertragsstaaten:
**DE FR GB IT NL**

(56) Entgegenhaltungen:
**EP-A- 0 173 812**
**EP-A- 0 218 276**
**FR-A- 2 345 485**
**US-A- 4 201 829**

(73) Patentinhaber: **BAYER AG**

**D-51368 Leverkusen(DE)**

(72) Erfinder: **Brüggemann, Horst**
**Kleine-Hartwich-Strasse 16**
**D-5000 Köln 60(DE)**
Erfinder: **Freitag, Dieter, Dr.**
**Hasenheide 10**
**D-4150 Krefeld(DE)**
Erfinder: **Meier, Lothar, Dr.**
**Buchenstrasse 31b**
**D-4322 Sprockhövel 2(DE)**
Erfinder: **Lindner, Christian, Dr.**
**Riehler Strasse 200**
**D-5000 Köln 60(DE)**
Erfinder: **Braese, Hans-Eberhard, Dr.**
**Käthe-Kollwitz-Strasse 3**
**D-5000 Köln 71(DE)**

**Beschreibung**

Die Erfindung betrifft die Verwendung thermoplastischer Formmassen aus PVC und (Ter)Polymerisaten, die gegebenenfalls auf ein Harz gepfropft sein können extrem niedrigen Doppelbrechung zur Herstellung optischer Datenspeicher

Thermoplastische Formmassen auf Basis von PVC mit Harzeigenschaften, die eine geringere Doppelbrechung aufweisen als PVC selbst, sind bislang unbekannt.

Es ist bekannt, daß sich Polycarbonat (PC), Polymethylmethacrylat (PMMA), Polystyrol (PS), Glas und reines PVC prinzipiell zur Herstellung optischer Datenspeicher aufgrund ihrer Transparenz eignen können. Alle bisher bekannten Systeme haben jedoch z.T. erhebliche Nachteile. Polycarbonat hat Probleme beim Doppelbrechungs-verhalten und der Kratzfestigkeit, PMMA hat eine zu hohe Wasseraufnahme, PS ist problematisch hinsichtlich Doppelbrechungsverhalten und Lösungsmittelbeständigkeit, Glas hat eine ungenügende mechanische Festigkeit, ist schwierig zu verarbeiten und zu teuer.

Mischungen aus PVC und Polymethylmethacrylat (z. B. EP-A 218 276) und Mischungen aus PVC und Pfropfpolymerisaten (z. B. FR-A 23 45 485) sind bekannt. Jedoch ist deren Eigenschaftsprofil nicht in allen Punkten ganz befriedigend.

Reines PVC hat außer einer ungünstigen Wärmeformbeständigkeit generell ein nur durchschnittliches Eigenschaftsniveau, so daß es bisher nicht zum Einsatz kommt.

Es wurde nun gefunden, daß PVC mit bestimmten (Ter)Polymerisaten, die gegebenenfalls auf ein Harz gepfropft sein können zu transparenten, schlagzähen, spannungsrißkorrosionsfreien thermoplastischen Formmassen mit extrem niedriger Doppelbrechung und genügender Warmeformbeständigkeit modifiziert werden kann und als optischer Datenspeicher verwendet werden kann.

Gegenstand der Erfindung ist daher die Verwendung von thermoplastischen Formmassen mit extrem niedriger Doppelbrechung aus Mischungen von

A) 30 - 70 Gew.-% PVC und

B) 70 - 30 Gew.-% eines thermoplastischen Polymerisationsharzes bestehend aus 30 - 40 Gew.-% $\alpha$-Methylstyrol, 52-62 Gew.-% Methylmethacrylat und 4-14 Gew.-% Acrylnitril, das

C) gegebenenfalls gepfropft sein kann auf eine Kautschukphase aus der Reihe der Dien-oder Diencopolymerisationskautschuke mit der Maßgabe, daß Komponente C) auch als Mischungspartner allein oder in Abmischung mit B) verwendet werden kann, zur Herstellung eines optischen Datenspeichers.

Bestehen die verwendeten Formmassen nur aus den Komponenten A und B, dann enthalten diese vorzugsweise:

A) 30-70 Gew.-% PVC und

B) 70-30 Gew.-% eines thermoplastischen Polymerisationsharzes bestehend aus 30-40 Gew.-% $\alpha$-Methylstyrol, 52-62 Gew.-% Methylmethacrylat und 4-14 Gew.-% Acrylnitril.

Bevorzugt werden Formmassen im Sinne der Erfindung verwendet, die bestehen aus:

30 - 70 % PVC und

70 - 30 % der Komponente B) und/oder C).

Im Falle der Verwendung der Komponente C als Mischungspartner besteht diese aus

I 95 - 15 Gew.-% (bezogen auf Pfropfprodukt) eines Gemisches von 30 - 40 Gew.-Teilen $\alpha$-Methylstyrol, 52 - 62 Gew.-Teilen Methylmethacrylat und 4 - 14 Gew.-Teilen Acrylnitril auf

II 5 - 85 Gew.-% (bezogen auf Pfropfprodukt) eines Kautschuks mit einem Teilchendurchmesser ($d_{50}$) von 50 - 1000 nm aus 0 - 40 Gew.-% einpolymerisiertem Styrol oder Acrylnitril und 100 - 60 Gew.-% einpolymerisiertem Butadien oder $C_1$-$C_6$-Alkylacrylat.

Das Pfropfpolymerisat C ist vorzugsweise ein Kautschuk aus 28 - 40 Gew. -% einpolymerisiertem Styrol oder Acrylnitril und 72 - 60 Gew.-% einpolymersiertem Butadien oder $C_1$-$C_6$-Alkylacrylat.

Den erfindungsgemäß verwendeten Formmassen kann nach Bedarf ein für PVC üblicher Modifikator zugesetzt werden, um z. B. die mechanischen Eigenschaften oder die Wärmeformbeständigkeit u.s.w. zu verbessern. Ferner können Fließhilfen, Flammschutzmittel, Stabilisatoren, Bläuungsmittel, Pigmente u.s.w. zugesetzt werden.

Als PVC-Komponente können erfindungsgemäß alle handelsüblichen PVC-Typen vorzugsweise mit einem K-Wert 30 - 100 eingesetzt werden.

Die Herstellung eines erfindungsgemäß verwendbaren thermoplastischen Polymerisationsharzes ist z.B. in der DE-OS 3 424 894 beschrieben.

Zusätzliche Harzkomponenten bzw. Modifikatoren wie MBS (Methylmethacrylat-Butdien-Styrol-Copolymer) sind bekannte Produkte. Solche MBS-Modifikatoren sind Pfropfpolymerisate auf Kautschuke; die zur Herstellung der Pfropfpolymerisate geeigneten Kautschuke sind teilchenförmig mit mittleren Teilchengrößen ($d_{50}$) von 0,08-0,3 $\mu$m und partiell vernetzt und besitzen Gelgehalte von >50 Gew.-%, insbesondere 70 bis 95 Gew. -%, bezogen auf Kautschuk.

Die Coumpoundierung der erfindungsgemäß verwendeten Masse kann auf den in der PVC-Technologie üblichen Mischaggregaten erfolgen. Die Formmassen können durch Walzen, Pressen, Extrudieren, Spritzgießen und andere übliche Verfahren im Temperaturbereich von z.B. 150-220°C hergestellt werden.

Die erfindungsgemäß verwendeten Massen können z.B. zur Herstellung von Compact-Discs verwendet werden.

Beispiele

Formmassen aus Komponenten A + B:

Die Formmassen wurden mit folgenden Rezepturen und Verarbeitungsbedingungen hergestellt:

1. Erfindungsgemäße Polymerisate, bestehend aus einem Terpolymerisat aus 55.5 Gew.-% Methylmethacrylat, 34,5 Gew.-% $\alpha$-Methylstyrol und 10 Gew.-% Acrylnitril (in den Beispielen MSAN genannt), mit einem Staudingerindex von 0,4, gemessen in DMF bei 23°C.

2. Die Herstellung von Preßplatten erfolgt bei 190°C und 12 min. Preßdauer aus einer auf einer Mischwalze bei 185°C für 10 min. homogenisierten Mischung der folgenden Rezeptur.

Zur Bestimmung der Doppelbrechung wurde in den drei Raumrichtungen M1, M2, M3 eines aus den erfindungsgemäßen Formmassen hergestellten rechteckigen Probekörpers die optische Anisotropie in nm/mm ausgemessen. Ein idealer Probekörper würde in den drei Raumrichtungen M1, M2, M3 einen Wert von jeweils 0 nm/mm zeigen. Die erfindungsgemäßen Rezepturen liefern Probekörper, die in den drei Raumrichtungen M1, M2, M3 eine Doppelbrechung zeigen, die in vergleichbarer Größenordnung liegt.

Tabelle 1

| Rezeptur-Nr. | 1* | 2 | 3 | 4 | 5 |
|---|---|---|---|---|---|
| Vestolit® M 5867 | 100 | 30 | 50 | 30 | 50 |
| MSAN | - | 70 | 50 | 70 | 50 |
| Irgastab®T 22 M | 1,5 | 1,5 | 1,5 | 1,5 | 1,5 |
| Loxiol® G 70 | 0,3 | 0,3 | 0,3 | 0,5 | 0,5 |
| Loxiol® G 72 | - | - | - | 1,0 | 1,0 |

Vestolit® M 5867: Masse-PVC (K-Wert 58) Irgastab® T 22 M: Butylzinnmercaptid-Stabilisator Loxiol® G 70: Hochmolekularer Fettsäureester Loxiol® G 72: Hochmolekularer Fettsäureester MSAN: Erfindungsgemäße Polymerisate

* zum Vergleich Rezeptur einer unmodifizierten PVC-Formmasse.

**T a b e l l e 2**

Optische Eigenschaften

| | Maßeinheiten | Polycarbonat[1] | Rezepturen | | | | | Prüfvorschriften |
|---|---|---|---|---|---|---|---|---|
| | | | 1 | 2 | 3 | 4 | 5 | |
| **Transmissions-** | | | | | | | | |
| **grad** | | | | | | | | |
| bei 550 nm | % | 90,9 | 89,5 | 88,5 | 89,2 | 68,1 | 63,0 | DIN 5036 |
| bei 800 nm | % | 91,5 | 91,2 | 91,4 | 91,6 | 83,9 | 77,5 | |
| **Gelbwert G** | | 2,3 | 6,5 | 8,1 | 7,8 | 21,3 | 22,3 | DIN 6167 |
| **Doppelbrechung[2]** | | | | | | | | |
| M1 | nm/mm | 8 | 80 | 5 | 5 | 0 | -21 | |
| M2 | nm/mm | 527 | 165 | 45 | 20 | 45 | 43 | |
| M3 | nm/mm | -539 | -91 | -32 | -7 | -45 | -25 | |

[1] Polycarbonat = Compact Disc-Platte; Rezepturen 1-6 = Preßplatten
[2] Polycarbonat = Preßplatte (240°C, 12 min; Granulat bei 120°C 4h im Vakuum vorgetrocknet);
M1, M2, M3 Raumrichtungen des Probekörpers bei der Bestimmung der optischen Anisotropie dieses
Probekörpers

EP 0 296 472 B1

T a b e l l e  3

Mechanische und thermischen Eigenschaften

| | Maßeinheiten | Polycarbonat | 1 | 3 | 5 | Prüfvorschriften |
|---|---|---|---|---|---|---|
| Reißfestigkeit | N/mm² | 55 | 46 | 65 | 59 | DIN 53 455 |
| Streckspannung | N/mm² | 60 | 57 | 64 | 69 | DIN 53 455 |
| Kerschlagzähigkeit 23° C | kJ/m² | 17 | 3 | 4 | 3 | DIN 53 453 |
| Kugeldruckhärte H 30 | N/mm² | 112 | 129 | 107 | 154 | DIN 53 456 |
| Vicat VST/B/120 | °C | 141 | 82 | 96 | 93 | DIN 53 460 |

Beispiele

Formmassen aus Komponenten A, B oder C

Die Formmassen wurden mit folgenden Rezepturen und Verarbeitungsbedingungen hergestellt:

1. Erfindungsgemäße Polymerisate (in den Beispielen MABS genannt) bestehen aus 20 Gew.-% eines Kautschuks und 80 Gew.-% eines Terpolymerisatharzes. Der Kautschuk besteht einerseits aus 65 Gew.-% Butadien und 35 Gew.-% Styrol. Das Terpolymerisat seinerseits besteht aus 55,5 Gew.-% Methylmethacrylat, 34,5 Gew.-% α-Methylstyrol und 10 Gew.-% Acrylnitril.

2. Die Herstellung von Preßplatten erfolgt bei 190°C und 12 min. Preßdauer aus einer auf einer Mischwaze bei 185°C für 10 min. homogenisierten Mischungen der folgenden Rezeptur:

Tabelle 4

| Rezeptur Nr. | 1* | 2 | 3 | 4 | 5 | |
|---|---|---|---|---|---|---|
| Vestolit® M 5867 | 100 | 50 | 50 | 50 | 50 | Gew.-Tle |
| MABS | - | 50 | 40 | 50 | 40 | " |
| Kane®A CE B 22 | - | - | 10 | - | 10 | " |
| Irgastab® T 22 M | 1,5 | 1,5 | 1,5 | 1,5 | 1,5 | " |
| Loxiol® G 70 | 0,3 | 0,3 | 0,3 | 0,5 | 0,5 | " |
| Loxiol® G 72 | - | - | - | 1 | 1 | " |

Vestolit® M 5867: Masse-PVC (K-Wert 58)
MBS, z.B. Kane ACE B 22
Irgastab® T 22 M: Butylzinnmercaptid-Stabilisator,
Loxiol® G 70: Hochmolekularer Fettsäureester,
Loxiol® G 72: Hochmolekularer Fettsäureester,
MABS: Erfindungsgemäße Polymerisate

* Zum Vergleich Rezeptur einer unmodifizierten PVC-Formmasse

6

In den folgenden Tabellen wird die besondere Eignung der erfindungsmäßigen Kompositionen bzw. Pfropfprodukte als Komponenten in PVC-Formmassen mit extrem niedriger Doppelbrechung demonstriert.

Tabelle 5                                                                Optische Eigenschaften

| | Maßeinheiten | Polycarbonat[1] | Rezepturen | | | | | Prüfvorschriften |
|---|---|---|---|---|---|---|---|---|
| | | | 1 | 2 | 3 | 4 | 5 | |
| Transmissionsgrad | | | | | | | | |
| bei 550 nm | % | 90,9 | 89,5 | 89,2 | 88,1 | 86,8 | 85,7 | DIN 5036 |
| bei 800 nm | % | 91,5 | 91,2 | 91,5 | 91,4 | 91,9 | 90,5 | |
| Streulicht[2] | $cd/m^2$ (Lx) | 0,44 | 1,7 | 1,9 | 1,1 | 1,8 | 1,2 | DIN 4646 |
| Gelbwert G | | 2,3 | 6,5 | 10 | 10,6 | 10,7 | 11,4 | DIN 6167 |
| Doppelbrechung[3] | | | | | | | | |
| M 1 | nm/mm | 8 | 80 | 0 | 4 | 5 | 7 | |
| M 2 | nm/mm | 527 | 165 | 18 | 16 | 15 | 11 | |
| M 3 | nm/mm | -539 | -91 | -19 | -13 | -6 | -2 | |

[1] Polycarbonat = Compact Disc-Platte; Rezepturen 1-5 = Preßplatten

[2] Senkrecht durch die Platte gemessen; mit enger Winkelöffnung des Strahlers

[3] Polycarbonat = Preßplatte (240°C, 12 min; Granulat bei 120°C 4 h im Vakuum vorgetrocknet);

M 1, M 2, M 3 Raumrichtungen des Probekörpers bei der Bestimmung der optischen Anisotropie dieses Probe-körpers.

EP 0 296 472 B1

Patentansprüche

1. Verwendung von thermoplastischen Formmassen mit extrem niedriger Doppelbrechung aus Mischungen von

Tabelle 6    Mechanische und thermische Eigenschaften

| | Maßein-heiten | Poly-carbonat | 1 | 2 | 3 | 4 | 5 | Prüfvor-schriften |
|---|---|---|---|---|---|---|---|---|
| Reißfestigkeit | $N/mm^2$ | 55 | 46 | 36 | 32 | 34 | 31 | DIN 53455 |
| Streckspannung | $N/mm^2$ | 60 | 57 | 53 | 45 | 51 | 42 | DIN 53455 |
| Kerbschlagzähikeit 23°C | $kJ/m^2$ | 17 | 3 | 4 | 12 | 4 | 16 | DIN 53453 |
| Izod Kerbschlagzähigkeit 23°C | $J/m$ | 600 | 58 | 49 | 170 | 52 | 506 | ASTM D 256 |
| Schlagzähikeit 23°C | $kJ/m^2$ | x | x | x | x | x | x | DIN 53453 |
| 0°C | $kJ/m^2$ | x | x | 5/10=99[a] | x | 4/10=65[b] | x | |
| Kugeldruckhärte H 30 | $n/mm^2$ | 112 | 129 | 105 | 92 | 100 | 83 | DIN 53456 |
| Vicat VST/B/120 | $°C$ | 141 | 82 | 91 | 87 | 91 | 84 | DIN 53460 |

a) von 10 Probekörpern 5 gebrochen, Durchschnittswert 99 $J/m^2$

b) von 10 Probekörpern 4 gebrochen, Durchschnittswert 65 $J/m^2$

x = nicht gebrochen

EP 0 296 472 B1

A) 30 - 70 Gew.-% PVC und

B) 70 - 30 Gew.-% eines thermoplastischen Polymerisationsharzes bestehend aus 30 - 40 Gew.-% $\alpha$-Methylstyrol, 52-62 Gew.-% Methylmethacrylat und 4-14 Gew.-% Acrylnitril, das

C) gegebenenfalls gepfropft sein kann auf eine Kautschukphase aus der Reihe der Dien-oder Diencopolymerisationskautschuke mit der Maßgabe, daß Komponente C) auch als Mischungspartner allein oder in Abmischung mit B) verwendet werden kann, zur Herstellung eines optischen Datenspeichers.

**Claims**

1. The use of thermoplastic moulding compounds having extremely low birefringence of mixtures of

A) 30 to 70% by weight of PVC and

B) 70 to 30% by weight of a thermoplastic polymerization resin consisting of 30 to 40% by weight of $\alpha$-methyl styrene, 52 to 62% by weight of methyl methacrylate and 4 to 14% by weight of acrylonitrile which

C) may optionally be grafted onto a rubber phase from the series of diene or diene copolymerization rubbers, with the proviso that component C) may also be used as a mixture component on its own or in admixture with B),

for the production of an optical disc.

**Revendications**

1. Utilisation de compositions thermoplastiques à mouler de biréfringence extrêmement faible, constituées de mélanges

A) de 30 à 70 % en poids de PVC et

B) de 70 à 30 % en poids d'une résine thermoplastique de polymérisation constituée de 30 à 40 % en poids d'alpha-méthylstyrène, 52 à 62 % en poids de méthacrylate de méthyle et 4 à 14 % en poids d'acrylonitrile, qui

C) peut être greffée le cas échéant sur une phase de caoutchouc de la série des caoutchoucs diéniques ou de copolymérisation d'un diène, sous réserve que le composant C) puisse aussi être utilisé comme partenaire des mélanges individuellement ou en mélange avec B), pour la production d'une mémoire optique.

9